# EUROPÄISCHE PATENTSCHRIFT

(11) **EP 1 862 342 B1**
(45) Veröffentlichungstag und Bekanntmachung des Hinweises auf die Patenterteilung: **27.06.2012**
(21) Anmeldenummer: 07109005.4
(22) Anmeldetag: 25.05.2007
(51) Int. Cl.: B60J 7/22

(54) **Windschotteinrichtung und Personenkraftfahrzeug mit einer Windschotteinrichtung**
Wind stop device and car with a wind stop device
Dispositif de pare vent et véhicule automobile munie d'un dispositif de pare vent

(30) Priorität: 30.05.2006 DE 102006025501
(43) Veröffentlichungstag der Anmeldung: 05.12.2007
(73) Patentinhaber: FKT GmbH, 85104 Pförring (DE); Körber, Stefan, 85092 Kösching (DE)
(72) Erfinder: Ortel, Andreas, 92334 Berching (DE); Körber, Stefan, 85092 Kösching (DE)
(74) Vertreter: Schlief, Thomas P.

(56) Entgegenhaltungen:
- DE-A1-102004 032 379
- DE-B3- 10 311 837
- DE-U1- 20 122 172

## Beschreibung

Die vorliegende Erfindung betrifft eine Windschotteinrichtung für ein Personenkraftfahrzeug umfassend ein Windschott und eine schwenkbar mit dem Windschott verbundene Abdeckung für einen Teilbereich einer Fahrgastraumöffnung des Personenkraftfahrzeuges, mittels welcher das Windschott in dem Personenkraftfahrzeug befestigbar ist, sowie Fixiereinrichtungen zur Befestigung der Abdeckung in dem Fahrzeug. Die Fixiereinrichtungen umfassen starr angeordnete Halteelemente. Weiterhin betrifft die Erfindung ein Personenkraftfahrzeug mit einer Windschotteinrichtung.

Derartige Windschotteinrichtungen sind im Stand der Technik in verschiedenen Ausführungen bekannt. Die Abdeckung wird hierbei derart an dem Personenkraftfahrzeug montiert, dass durch sie ein Innenraum des Personenkraftfahrzeuges nach außen hin abgedeckt ist. Die Windschotteinrichtung mit der Abdeckung wird hierbei derart angeordnet, dass sich die Abdeckung oberhalb der Rücksitze befindet und somit den Raum zwischen den Vordersitzen und den Lehnen der Fahrzeugrücksitze abdeckt. Das Windschott ist schwenkbar an der Abdeckung angeordnet und befindet sich in Gebrauchsstellung direkt hinter den Lehnen der Vordersitze, um die Insassen auf den Vordersitzen vor unangenehmen Luftströmungen zu schützen. Die Abdeckung dient zugleich der Befestigung der Windschotteinrichtung in dem Fahrzeug.

Die DE 10 2004 032 379 A1 beschreibt eine derartige Windschotteinrichtung mit einem Windschott und einer Abdeckung. Die Abdeckung ist im Bereich der Gürtellinie an der Karosserie über Fixiereinrichtungen fixierbar. Diese Fixiereinrichtungen können beispielsweise ausfahrbare Haltezapfen umfassen, die mit entsprechenden Ausnehmungen im Bereich der Karosserie in Eingriff bringbar sind. Zusätzlich ist die Abdeckung im Bereich der Rücksitzlehne in einer hinteren Fixiereinrichtung fixierbar. Hierzu sind an der Abdeckung Fixiervorsprünge angeordnet, welche wiederum Zapfen aufweisen, die in die hintere Fixiereinrichtung eintauchen und in dieser verankerbar sind.

Die DE 201 22 172 U1 beschreibt ebenfalls eine Windschotteinrichtung mit einer Abdeckung und einem an dieser klappbar angeordneten Windschott. Zur Montage an dem Personenkraftfahrzeug ist die Abdeckung rückseitig bzw. rückwärtig mit zwei starr angeordneten Haltestiften versehen. Diese sind weitgehend parallel zu einem seitlichen Ende der Abdeckung orientiert und ragen über das hintere Ende der Abdeckung hinaus. Als vordere Fixiereinrichtung sind an den jeweils anderen Enden der Abdeckung verriegelbare Haltestifte vorgesehen, welche in Fahrzeugquerrichtung verschieblich geführt sind. Die Montage der Windschotteinrichtung erfolgt derart, dass zunächst bei eingezogenen vorderen Haltestiften die hinteren Haltestifte in ihnen zugeordnete rückwärtige Ausnehmungen in x-Richtung (Fahrzeuglängsrichtung) eingeschoben werden. Anschließend werden die in y-Richtung (Fahrzeugquerrichtung) verschieblichen Haltestifte entriegelt und wieder ausgefahren und in die jeweils zugeordneten seitlichen Ausnehmungen am Personenkraftfahrzeug eingeführt. Die rückwärtigen Ausnehmungen sind üblicherweise zwischen einem Rücksitz und einer Seitenverkleidung angeordnet. Die Montage eines derartigen Windschotts ist vergleichsweise aufwendig, da einerseits das Auffinden der rückwärtigen Ausnehmungen schwierig ist und es zu Verwicklungen der Haltestifte mit den Sicherheitsgurten kommen kann. Daneben ist das Gewicht des Windschotts zum Entriegeln und Einschieben der vorderen Haltestifte durch den Bediener abzustützen, was die Montage ebenfalls erschwert.

Aufgabe der vorliegenden Erfindung ist es, eine Windschotteinrichtung sowie ein Personenkraftfahrzeug zu schaffen, mit welchen die Montage und Befestigung der Windschotteinrichtung erleichtert ist.

Die Aufgabe wird gelöst mit den Merkmalen der unabhängigen Ansprüche.

Eine Windschotteinrichtung für ein Personenkraftfahrzeug umfasst ein Windschott und eine schwenkbar mit dem Windschott verbundene Abdeckung für einen Teilbereich einer Fahrgastraumöffnung des Personenkraftfahrzeuges. Das Windschott ist mittels der Abdeckung in dem Personenkraftfahrzeug befestigbar. Weiterhin umfasst die Windschotteinrichtung Fixiereinrichtungen zur Befestigung der Abdeckung in dem Fahrzeug, wobei die Fixiereinrichtungen mindestens zwei, vorzugsweise jeweils im Bereich von seitlichen, einander gegenüberliegenden Abschnitten der Abdeckung starr angeordnete Halteelemente umfassen. Erfindungsgemäß erstrecken sich die montierten Halteelemente in Fahrzeugquerrichtung über einen Rahmen der Abdeckung hinaus, wobei die Halteelemente die seitlichen Fahrzeugverkleidungen in Aufsicht gesehen schneiden. Hierdurch können sie mit an dem Personenkraftfahrzeug angeordneten Aufnahmen formschlüssig zusammenwirken. Zudem ist die Handhabung der erfindungsgemäßen Windschotteinrichtung sehr einfach. Auch entfallen die bisher vorhandenen Raumprobleme mit den hinteren Sicher heitsgurten. Indem die Halteelemente - von oben gesehen - in die Seitenverkleidung eintauchen bzw. diese schneiden, kann eine sichere Lagerung der Windschotteinrichtung gewährleistet werden. Die Aufnahmen selbst ragen hierbei vorteilhafterweise nicht oder unwesentlich in den Fahrgastraum und stören somit nicht.

Die starren Halteelemente müssen nicht notwendigerweise in Fahrzeugquerrichtung (y-Richtung) über den Rahmen in seiner maximalen Breite hinausragen. Es reicht, wenn dies in funktionswahrender Ausgestaltung an der Stelle des Rahmens lokal realisiert ist, an der das Halteelement angeordnet ist.

Die Aufnahmen des erfindungsgemäßen Personenkraftfahrzeugs weisen vorzugsweise zumindest zwei einander gegenüberliegende Abstützflächen auf zur Abstützung der Halteelemente in Fahrzeughochrichtung (z-Richtung). Die Aufnahmen sind zum formschlüssigen Zusammenwirken mit den Halteelementen ausgebildet. Die Aufnahmen umgreifen die Halteelemente hierbei derart, dass die Abdeckung auch in Fahrzeugquerrichtung sicher fixiert ist. Da die Halteelemente sich vorzugsweise vorwiegend in Fahrzeugquerrichtung erstrecken und mit seitlich an dem Kraftfahrzeug angeordneten Aufnahmen zusammenwirken, ist ein aufwändiges Einfädeln eines Haltestiftes nicht erforderlich.

Da die Aufnahmen seitlich in dem Kraftfahrzeug angeordnet sind, ist die Positionierung der Windschotteinrichtung in dem Fahrzeug erleichtert. Das Montieren der Windschotteinrichtung ist weiterhin dadurch erleichtert, dass die Abstützflächen der Aufnahmen während der Montage als Hilfsablage dienen können. Ein Abstützen der Windschotteinrichtung durch den Bediener während der Betätigung der vorderen Haltestifte ist hierdurch nicht mehr erforderlich.

Besonders bevorzugt umfassen die Fixiereinrichtungen seitlich jeweils mindestens ein an der Abdeckung starr angeordnetes Halteelement, wobei die Windschotteinrichtung zur Montage in Fahrzeugquerrichtung (y-Richtung) klappbar ausgeführt ist. Hierbei kann der Bediener seitlich vom Fahrzeug stehen, so dass einfachste Bedienbarkeit realisiert wird. Die Windschotteinrichtung ist hierbei zweckmäßigerweise klappbar ausgebildet, wobei das Windschott auf der Abdeckung liegt. Beide sind vorteilhaft zudem mit einem Doppelgelenk verbunden und mit in x-Richtung verlaufenden Schwenkachsen geklappt. Der Bediener führt zunächst das oder die von ihm entfernteren Halteelemente in die im gegenüberliegende(n) Aufnahme(n) der entfernten Fahrzeugseite. Beim anschließenden Aufklappen der Windschotteinrichtung führt der Bediener gleichzeitig das bzw. die Halteelemente in die entsprechenden Aufnahmen an seiner Fahrzeugseite ein.

Insbesondere gemäß der zuvor genannten Ausführungsform der Erfindung ist es vorteilhaft, wenn die Windschotteinrichtung in Fahrzeugquerrichtung mit Schwenkachsen in x-Richtung klappbar ausgeführt ist. Hierdurch kann die Windschotteinrichtung bei Nichtgebrauch Platz sparend verstaut werden. Insbesondere ist es vorteilhaft, wenn das Windschott aus zwei Teilen besteht, welche durch ein Doppelgelenk miteinander verbunden sind (s.o.). Hierdurch kann nach Anklappen des Windschotts an die Abdeckung die gesamte Windschotteinrichtung in Querrichtung zusammengeklappt werden.

Gemäß einer Ausführungsform der Erfindung umfassen die Fixiereinrichtungen vordere und hintere Fixiereinrichtungen an beiden Seiten der Abdeckung. Bevorzugt sind gemäß einer Variante an beiden Seiten der Abdeckung, jeweils vorne und hinten, jeweils zwei einander gegenüberliegende Halteelemente vorgesehen. In einem derartigen erfindungsgemäßen Personenkraftfahrzeug sind entsprechend vier Aufnahmen für die Halteelemente paarweise im Bereich einander gegenüberliegender Seitenwände angeordnet. Die Aufnahmen sind hierbei zum Einschieben der Halteelemente in Fahrzeugquerrichtung ausgebildet, wobei die Windschotteinrichtung in Fahrzeugquerrichtung klappbar ausgeführt ist. Die Montage der Windschotteinrichtung in dem Fahrzeug kann somit in bedienerfreundlicher Weise von außen und in Fahrzeugquerrichtung erfolgen. Die Aufnahmen weisen hierzu beispielsweise eine schräge obere Abstützfläche auf, um einen vergrößerten Einschubbereich zu schaffen.

Gemäß einer Alternative ist jeweils nur ein starres Halteelement an jeder Seite der Abdeckung vorgesehen, welches dann länglich ausgebildet ist und in eine entsprechend nutförmig ausgebildete Aufnahme einführbar ist.

Alternativ sind die starren Halteelemente nur im Bereich der hinteren Enden der Abdeckung vorgesehen. Bei einer dementsprechenden Ausführungsform umfassen vordere Fixiereinrichtungen in Fahrzeugquerrichtung bewegliche Stifte. Vorzugsweise sind die beweglichen Stifte zur Montage der Windschotteinrichtung in Fahrzeuglängsrichtung einfahrbar und nach Montage zur Fixierung der Windschotteinrichtung in dem Fahrzeug wieder ausfahrbar. Die Abdeckung wird hierbei zur Montage zunächst in Fahrzeuglängsrichtung in die beiden hinteren Aufnahmen eingeschoben und anschließend in herkömmlicher Weise durch die querbeweglichen, vorne angeordneten Stifte in dem Fahrzeug gesichert.

Vorzugsweise sind die Halteelemente als Nasen ausgebildet. Hierdurch ist die Handhabung erleichtert und die Verletzungsgefahr vermindert, da keine langen Teile von der Windschotteinrichtung abstehen. Zugleich ermöglicht die Ausbildung der Halteelemente als Nasen ein günstiges Zusammenwirken mit den Abstützflächen der Aufnahmen.

Weiterhin ist bevorzugt, dass die Halteelemente je eine endseitige Verbreiterung in z-Richtung und die Aufnahmen eine korrespondierende Hinterschneidung aufweisen, so dass die Windschotteinrichtung nach Einschieben der Abdeckung (entgegen die Fahrtrichtung) in y-Richtung stabilisiert wird. Die Verbreiterung des Halteelements kann beispielsweise als Schwalbenschwanz und die Hinterschneidung der Aufnahme als entsprechend ausgebildete Nut ausgeführt sein. Bei einer alternativen Ausführungsform ist die Verbreiterung ballig ausgestaltet, während die Aufnahme im Querschnitt entsprechend konkav ausgebildet ist. Der durch den Fahrtwind erzeugte, nach unten gerichtete Druck kann in diesem Fall das Windschott nur unwesentlich durchbiegen.

Vorzugsweise sind die Aufnahmen hierbei derart ausgeführt, dass sie in drei Richtungen Abstützflächen für die Halteelemente aufweisen und in einer vierten Richtung zum Einschieben der Halteelemente ausgebildet sind. Das Einschieben und Entfernen der Abdeckung aus dem Fahrzeug ist hierdurch auf einfache Weise möglich.

Vorzugsweise sind hierbei die Aufnahmen derart ausgebildet, dass ein Einschieben der Abdeckung bzw. der Halteelemente von vorne nach hinten bezogen auf die Fahrtrichtung möglich ist. Das Einschieben der Halteelemente in die Aufnahmen ist besonders einfach, wenn die Aufnahme eine bezogen auf das Halteelement verbreiterte Einschuböffnung aufweist.

Das Einschieben der Halteelemente ist weiterhin erleichtert, wenn die Aufnahme eine bezogen auf die Seitenverkleidung schräge Gleitfläche zum Einschieben des Halteelementes aufweist. Die Halteelemente weisen entsprechend eine schräge Seitenfläche bezogen auf den seitlichen Rahmen der Abdeckung auf. Da üblicherweise die Breite des Fahrzeugs zwischen den Seitenverkleidungen von vorne nach hinten hin abnimmt, ist durch die schrägen Seitenflächen das Einschieben der Abdeckung in besonders einfacher Weise möglich.

Gemäß einer vorteilhaften Ausführung sind die Halteelemente als separate Bauteile ausgebildet, welche durch wenigstens ein Befestigungsmittel mit einem Rahmen der Abdeckung verbunden sind. Ebenso ist es jedoch auch möglich, dass die Halteelemente einteilig mit einem Rahmen der Abdeckung ausgeführt sind. Ist der Rahmen als einteiliges, gebogenes Aluminiumprofil ausgebildet, kann hierdurch ein besonders hochwertiges Erscheinungsbild der Windschotteinrichtung erreicht werden.

Gemäß einer anderen vorteilhaften Weiterbildung der Erfindung ist der Rahmen mehrteilig aus Profilen ausgeführt, welche durch Verbindungsstücke miteinander verbunden sind. Hierdurch ist es möglich, eine vergleichsweise kostengünstige Variante einer Windschotteinrichtung bereit zu stellen. Vorteilhaft ist es hierbei, wenn die Verbindungsstücke aus Kunststoff gefertigt sind, wobei die Halteelemente der Fixiereinrichtung an jeweils ein Verbindungsstück einteilig angeformt sind. Der Rahmen der Abdeckung samt Halteelementen kann hierdurch besonders kostengünstig gefertigt werden, wobei zugleich eine Montage der Halteelemente an den Rahmen entfällt.

Die Aufnahmen für die Halteelemente sind vorteilhafterweise an einer Seitenverkleidung des Personenkraftfahrzeuges angeordnet. Weiterhin ist es vorteilhaft, wenn die Aufnahmen als Einsatz ausgebildet sind, welche in eine entsprechende Ausnehmung der Seitenverkleidung einsetzbar sind. Vorzugsweise sind die Aufnahmen hierbei aus Kunststoff gefertigt, so dass diese sowohl preisgünstig herstellbar sind als auch in einfacher Weise optisch an den Innenraum des Fahrzeuges angepasst werden können.

Insbesondere ist es hierbei vorteilhaft, wenn die Aufnahmen derart in die Ausnehmung der Seitenverkleidung einsetzbar sind, dass sie mit dieser flächenbündig abschließen. Hierdurch kann ein besonders hochwertiges Erscheinungsbild des Fahrzeuginnenraumes erreicht werden. Dies kann auch erreicht werden, indem die Aufnahme einteilig mit der Seitenverkleidung des Personenkraftfahrzeugs ausgebildet ist.

Weiterhin ist es vorteilhaft, wenn die Aufnahme versteift ist oder zur Versteifung mit der Karosserie des Personenkraftfahrzeuges verbunden ist. Die auf die Aufnahme durch die Windschotteinrichtung wirkenden Kräfte können hierdurch in günstiger Weise aufgenommen werden. Hierbei ist es vorteilhaft, wenn die Aufnahmen an der Karosserie verschraubt sind und somit sowohl eine Stabilität für die Windschotteinrichtung als auch für die Seitenverkleidung gewährleisten.

Um Toleranzen insbesondere in Fahrzeugquerrichtung auszugleichen und störenden Klappergeräuschen vorzubeugen, können an den Halteelementen oder an den Aufnahmen elastische bzw. dämpfende Elemente vorgesehen werden. Gemäß einer vorteilhaften Ausführung der Erfindung sind hierzu die Aufnahmen des erfindungsgemäßen Personenkraftfahrzeugs in Ruhestellung mit einem federbelasteten Deckel verschlossen, welcher in Funktionsstellung einen Toleranzausgleich bewirkt. Ebenso kann an den Halteelementen in Fahrzeugquerrichtung endseitig ein federbelastetes Element, insbesondere eine Kugel, angeordnet sein, welches mit einer entsprechenden Ausnehmung der Aufnahme zusammenwirkt. Eine Entklapperung und Zentrierung in dem Fahrzeug kann auch durch einen Gummiring oder eine Gummierung erreicht werden, welche an dem Halteelement angeordnet sind und vorteilhafterweise in x-, y- und z-Richtung über das Halteelement hinausragt. Diese elastischen oder dämpfenden Elemente ändern nichts an der starren Anordnung der Halteelemente.

Weitere Vorteile der Erfindung werden anhand der nachfolgend ausgeführten Ausführungsbeispiele beschrieben. Es zeigen:
- **Figur 1**: eine erfindungsgemäße Windschotteinrichtung in Einbauposition in einem Fahrzeug in einer Ansicht von vorne,
- **Figur 2**: ein erfindungsgemäßes Halteelement im Zusammenwirken mit einer erfindungsgemäßen Aufnahme,
- **Figur 3**: eine Aufnahme in einer perspektivischen Darstellung,
- **Figur 3a**: eine alternative Ausführungsform einer Aufnahme von der Seite gesehen,
- **Figur 4**: eine perspektivische Darstellung eines Halteelementes,
- **Figur 5**: eine Darstellung eines einteilig mit einem Verbindungsstück ausgeführten Halteelementes,
- **Figur 6, 7 & 8**: Detaildarstellungen verschiedener Einrichtungen zum Toleranzausgleich und zur Entklapperung,
- **Figur 9**: eine Darstellung der Montage einer erfindungsgemäßen Windschotteinrichtung in Fahrzeuglängsrichtung,
- **Figur 9a**: die Windschotteinrichtung in einer vorläufigen Ruheposition, und
- **Figur 10 & 11**: eine Darstellung der Montage einer erfindungsgemäßen Windschotteinrichtung in Fahrzeugquerrichtung.

Die Windschotteinrichtung 1 umfasst eine Abdeckung 2, welche einerseits der Befestigung der Windschotteinrichtung 1 in dem Fahrzeug dient, andererseits einen Teilbereich einer Fahrgastraumöffnung des Personenkraftfahrzeuges abdeckt. An der Abdeckung 2 ist um eine Schwenkachse 5 das ebenfalls zur Windschotteinrichtung 1 gehörende Windschott 6 schwenkbar angeordnet. Gemäß der vorliegenden Darstellung befindet sich das Windschott 6 aufgeklappt in Gebrauchsstellung, so dass es nahezu senkrecht hinter den hier nicht dargestellten Kopfstützen der Vordersitze positioniert ist. Die Abdeckung 2 erstreckt sich im wesentlichen parallel zu einer Gürtellinie 7 des Kraftfahrzeuges bis hin zu den Lehnen der Rücksitze 8. Der Raum unterhalb der Abdeckung 2 kann somit als Stauraum genutzt werden. Das Windschott 6 wie auch die Abdeckung 2 weisen einen weitgehend steifen Rahmen 9 bzw. 13 auf, an welchem jeweils windabweisende Flächenelemente 10 aufgespannt sind, welche aus Gründen der Übersichtlichkeit zum Teil nur angedeutet sind. Die Flächenelemente 10 sind windabweisend ausgeführt, können jedoch auch aus einem luftdurchlässigen Material wie einem Netz oder Gewebe hergestellt sein.

Um die Windschotteinrichtung 1 bei Nichtgebrauch platzsparend verstauen zu können, weist zumindest der Rahmen 9 des Windschotts 6 zwei Gelenke 11 auf, so dass das Windschottelement 1 um die Klappachse 12 zusammenklappbar ist. Der Rahmen 13 besteht aus zwei Teilen, welche ebenfalls gelenkig miteinander verbunden sind, so dass nach dem Anschwenken des Windschotts 1 an die Abdeckung 2 beide Teile um die Klappachse 12 zusammengeklappt werden können. Die Gelenke 11 sind hierzu als Doppelgelenke ausgeführt, so dass in eingeklapptem Zustand die Abdeckung 2 zwischen den Teilen des Windschotts 6 zu liegen kommt. Ebenso ist es auch möglich, dass nur ein Teil der Abdeckung 2 mit dem Rahmen 9 des Windschotts 6 fest verbunden ist, während der andere Teil der Abdeckung 2 lösbar mit dem Rahmen 9 verbunden ist. Auch hierdurch ist es möglich, die Windschotteinrichtung 1 auf ein sehr kleines Maß zusammenzufalten.

Zur Befestigung der Windschotteinrichtung 1 in dem Fahrzeug weist die Windschotteinrichtung 1 vordere und hintere Fixiereinrichtungen 14, 15 auf, mittels welcher die Abdeckung 2 in dem Fahrzeug fixiert wird. Gemäß der vorliegenden Darstellung sind die vorderen Fixiereinrichtungen 14 als in Fahrzeugquerrichtung bewegliche Stifte ausgebildet.

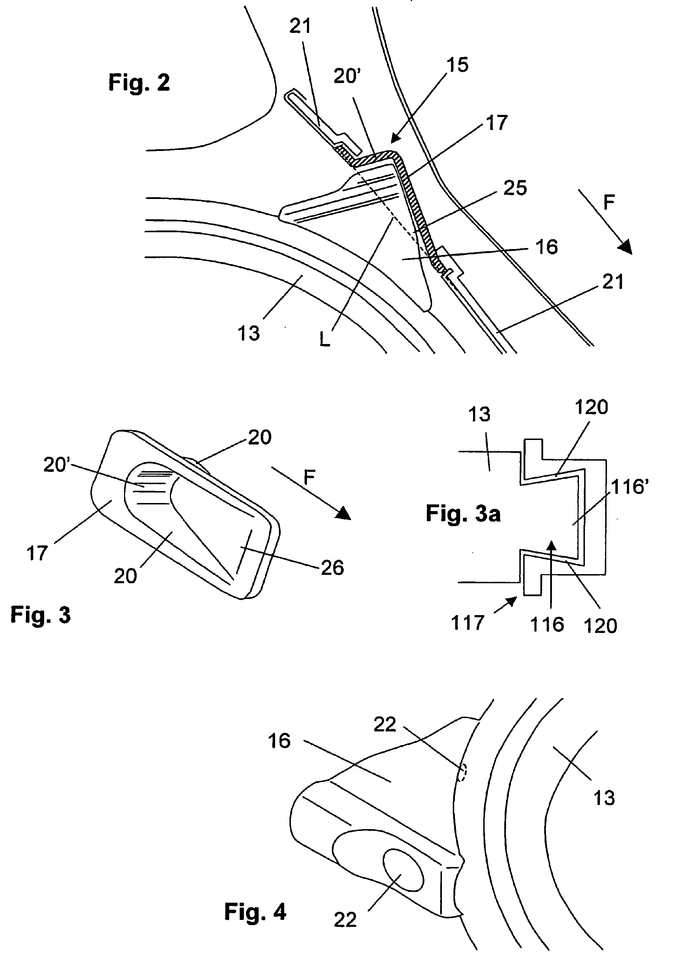

Erfindungsgemäß umfassen die - hier vorliegend - hinteren Fixiereinrichtungen 15 wenigstens zwei jeweils im Bereich der seitlichen einander gegenüberliegenden Enden der Abdeckung 2 starr angeordnete Halteelemente 16 (Figur 2). Vorliegend sind die Halteelemente 16 jeweils in Form einer Nase ausgebildet; es sind jedoch auch andere Formen möglich (vgl. Fig. 4), wobei die Halteelemente 16 auch als starrer Stift ausgebildet sein können. Erfindungsgemäß erstrecken sich die Halteelemente 16 in Fahrzeugquerrichtung über die dortige lokale Breite des Rahmens 13 der Abdeckung 2 hinaus und schneiden in der Aufsicht gesehen (Figur 2) die seitlichen Fahrzeugverkleidungen 21. Die Schnittlinie ist in der Figur 2 als gestrichelte Linie L eingezeichnet. In dem Fahrzeug sind wenigstens zwei, mit den Halteelementen 16 formschlüssig zusammenwirkende Aufnahmen 17 jeweils im Bereich einander gegenüberliegender Seitenwände des Fahrzeugs angeordnet.

Die Aufnahmen 17 sind derart ausgeführt, dass sie wenigstens zwei, einander gegenüber liegende Abstützflächen 20 für die Halteelemente 16 aufweisen (Figur 3). Die Halteelemente 16 können hierdurch in die Aufnahmen 17 eingeschoben werden und sind in Fahrzeughochrichtung fixiert. In der gezeigten Darstellung weist die Aufnahme 17 eine dritte Abstützfläche 20' auf, welche nach dem Einschieben der Halteelemente 16 in die Aufnahme 17 als Anschlag dient und somit die Windschotteinrichtung 1 in Einbaulage positioniert. Hierdurch können die beweglichen Stifte der vorderen Fixiereinrichtungen 14 in einfacher Weise betätigt werden.

Weiterhin ist die Aufnahme 17 derart ausgestaltet, dass ein Einschieben der Halteelemente 16 samt der Abdeckung 2 in einer vierten Richtung möglich ist. Gemäß der Darstellung der Figur 3 weist die Aufnahme 17 hierzu eine verbreiterte Einschuböffnung 26 auf, so dass das Einschieben der Halteelemente 16 erheblich erleichtert ist.

Die Aufnahmen 17 können in einfacher und preisgünstiger Weise als Kunststoffteile hergestellt werden. Nach den Figuren 2 und 3 erfolgt die Montage der Windschotteinrichtung 1 in Fahrzeuglängsrichtung entgegen der Fahrtrichtung, welche jeweils durch Pfeile F angedeutet ist.

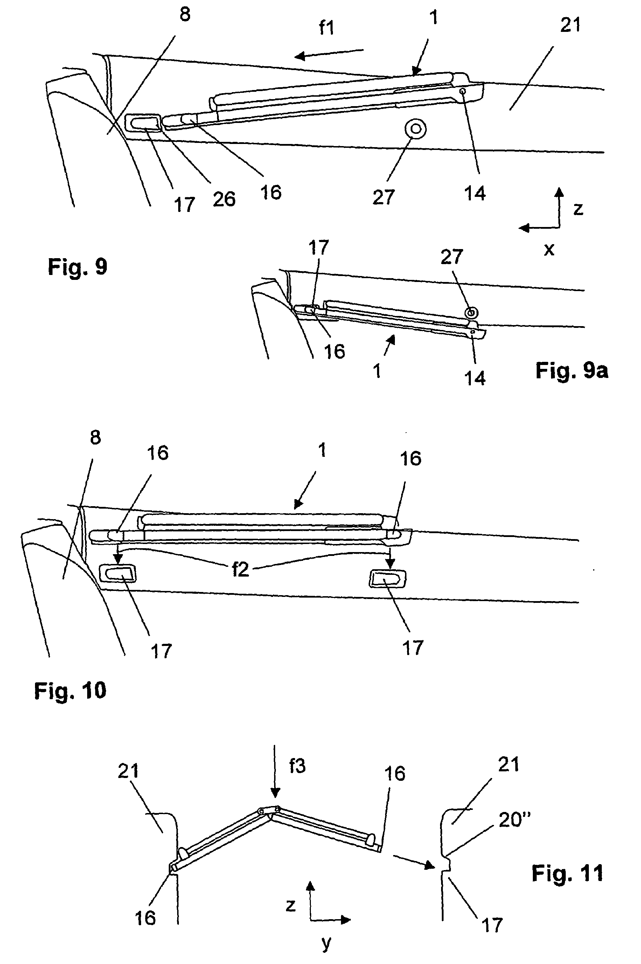

Gemäß einer anderen Variante der Erfindung erfolgt die Montage der Windschotteinrichtung 1 in Fahrzeugquerrichtung von oben (vgl. Fig. 11), wobei die Aufnahmen 17 hierzu zweckmäßigerweise eine schräge, obere Abstützfläche 20" aufweisen.

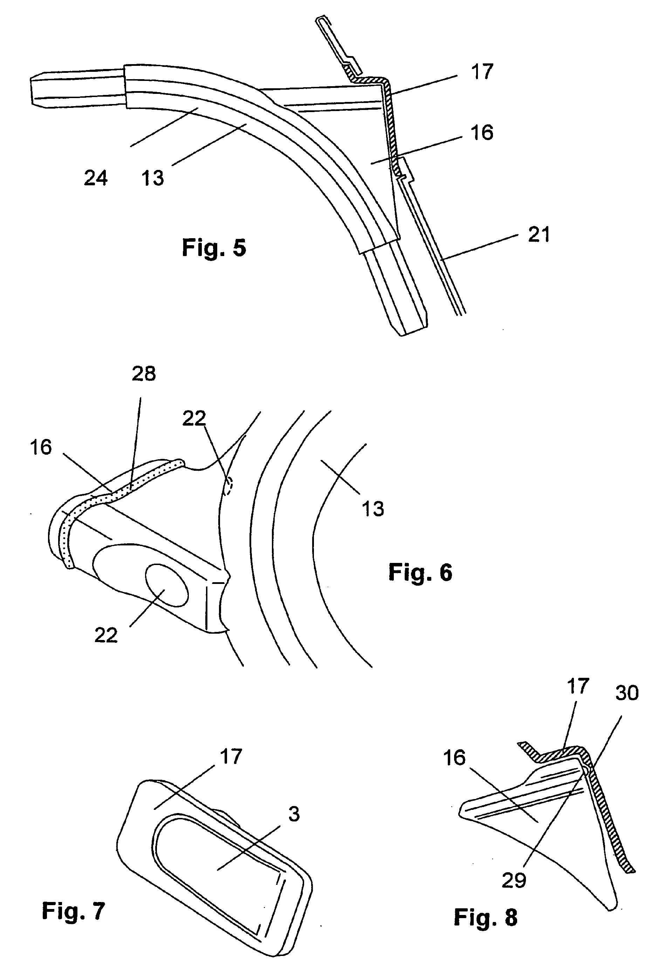

Wie in Figur 2 ersichtlich, ist die Aufnahme 17 an einer Seitenverkleidung 21 des Kraftfahrzeuges angeordnet. Vorliegend ist die Aufnahme 17 als Einsatz ausgebildet, welcher in eine Ausnehmung der Seitenverkleidung 21 einsetzbar ist. In besonders bevorzugter Ausführung ist Aufnahme 17 derart in die Seitenverkleidung 21 eingesetzt, dass sie mit dieser flächenbündig abschließt. Die Aufnahmen 17 können beispielsweise durch Klipsen oder auch durch andere Befestigungsmittel an der Seitenverkleidung angebracht werden. Ein Verkleben der Aufnahmen 17 in der Seitenverkleidung 21 ebenso möglich. Die Aufnahme 17 kann gleichfalls an der Karosserie verschraubt sein, um auch der Seitenverkleidung Stabilität zu verleihen. Eine weitere, hier nicht dargestellte Variante der Erfindung sieht vor, dass die Aufnahmen 17 einteilig mit den Seitenverkleidungen 21 ausgebildet sind. Insbesondere, wenn die Aufnahme 17 mit einem Deckel 3 versehen ist (vgl. Fig. 7), kann die Seitenverkleidung serienmäßig mit derartigen Aufnahmen 17 versehen sein, da diese optisch nicht störend in Erscheinung treten.

Um die Kräfte, welche durch die Windschotteinrichtung 1 auf die Aufnahmen 17 wirken, sicher aufnehmen zu können, können die Aufnahmen 17 versteift sein. Die Aufnahmen 17 sind hierzu beispielsweise nicht nur an der Seitenverkleidung 21 befestigt, sondern auch direkt mit der Karosserie verbunden.

Sind die Halteelemente 16 als Nasen ausgebildet, können diese besonders günstig durch die Abstützflächen 20 der Aufnahmen 17 abgestützt werden, so dass die Aufnahmen 17 während der Montage der Windschotteinrichtung 1 als Zwischenablage dienen können. Der Bediener hat somit die Hände frei, um die Fixiereinrichtungen 14 zu betätigen (s.a. Figur 9a).

In der Figur 3a ist eine weitere Ausführungsform eines Halteelements 116 mit einer korrespondierend ausgebildeten Aufnehmung 117 dargestellt. Die im Querschnitt schwalbenschwanzförmige Ausgestaltung des am Rahmen 13 angeformten Halteelements 116 und die entsprechende Ausformung der Aufnahme verhindern, dass die Abdeckung 2 im Gebrauchszustand in der Klappachse 12 eingeklappt bzw. durchgedrückt wird. Es resultiert somit eine stabilere Lage der Windschotteinrichtung in y-Richtung. Die beiden sich erfindungsgemäß gegenüberliegenden Abstützflächen 120 des Halteelements 116 sind hier geneigt zueinander ausgeführt. Im übrigen kann das Halteelement 116 wie dasjenige der Figur 3 ausgebildet sein.

Figur 4 zeigt ein Halteelement 16 in perspektivischer Detaildarstellung. Das Halteelement 16 ist hier als separates Bauteil ausgebildet, welches durch wenigstens ein Befestigungsmittel mit dem Rahmen 13 der Abdeckung 2 verbunden ist. Gemäß der vorliegenden Darstellung ist die Befestigung mittels zwei hier nicht dargestellten Befestigungsmitteln vorgesehen. Zur Aufnahme der Befestigungsmittel, welche insbesondere Schrauben oder Niete sein können, weist das Halteelement 16 zwei entsprechende Aufnahmebohrungen 22 auf. Der Rahmen 13 der Abdeckung 2 ist in diesem Falle als einteiliges, gebogenes Aluminiumprofil ausgebildet. Hierdurch lässt sich ein besonders hochwertiges Erscheinungsbild der Windschotteinrichtung 1 in dem Kraftfahrzeug erreichen.

Figur 5 zeigt eine weitere Ausführungsform der Erfindung, bei welcher der Rahmen 13 mehrteilig aus Profilen ausgeführt ist. Die einzelnen Profile sind durch Verbindungsstücke 24 miteinander verbunden. Hierdurch ist ein aufwändiges Biegen des Rahmenprofils nicht erforderlich. Die Verbindungsstücke 24, vorzugsweise aus Kunststoff, sind mit ihren Enden in die Profile einsteckbar und verbinden diese hierdurch. Die Halteelemente 16 der Befestigungsvorrichtung 15 können in diesem Falle in einfacher Weise einteilig an die Verbindungsstücke 24 angeformt werden. Der Rahmen 9 bzw. 13 einer Windschotteinrichtung ist hierdurch in einfacher Weise kostengünstig herstellbar.

Figuren 9, 9a, 10 und 11 zeigen mögliche Montagen von Windschotteinrichtungen 1 in einem Fahrzeug. Nach einer ersten Variante (Fig. 9) erfolgt die Montage der Windschotteinrichtung 1 durch Einschieben in Fahrzeuglängsrichtung, s. Pfeil f1. Die beweglichen Stifte der vorderen Fixiereinrichtungen 14 müssen hierzu zunächst eingefahren und verriegelt werden, da diese seitlich über die dort vorhandene Breite der Abdeckung 2 hinausstehen und die Montage behindern würden. Anschließend können die Windschotteinrichtung 1 und die Halteelemente 16 in die Aufnahmen 17 entgegen der Fahrtrichtung (s. Pfeil f1) eingeschoben werden. Dies wird auch dadurch erleichtert, dass die Breite der Fahrzeugkarosserie sich von vorne nach hinten hin verengt, so dass die seitlich überstehenden Halteelemente 16 der hinteren Fixiereinrichtungen 15 nicht mit den Seitenverkleidungen 21 oder anderen Bauteilen kollidieren. Die Halteelemente 16 weisen daher eine bezogen auf den seitlichen Rahmen 13 der Abdeckung 2 schräge Seitenfläche 25 auf, welche beim Einschieben an einer entsprechend angeordneten, schrägen Gleitfläche der Aufnahme 17 entlang gleitet. Da die Aufnahmen 17 in einem Bereich vor den Rücksitzen 8 angeordnet sind und die Halteelemente 16 nicht nach hinten über die Abdeckung 2 überstehen, sind keine Verwicklungen mit Gurten oder anderen Bauteilen wie im Stand der Technik zu befürchten. Auch ist das Einschieben erleichtert, da die Aufnahmen 17 verbreiterte Einschuböffnungen 26 aufweisen.

Durch die Abstützflächen 20 der Aufnahmen 21 kann die Windschotteinrichtung 1 während der Montage abgestützt werden, so dass die Aufnahmen 21 auch zur Sicherung der Windschotteinrichtung 1 bei einer Zwischenablage dienen können, s. Figur 9a. Der Bediener muss somit die Windschotteinrichtung 1 nicht mehr abstützen und hat die Hände frei, um die beweglichen Stifte der vorderen Fixiereinrichtungen 14 zu entriegeln. Schließlich kann die Windschotteinrichtung 1 gegenüber den fahrzeugfesten Aufnahmen 27 der vorderen Fixiereinrichtung 14 positioniert werden und die beweglichen Stifte in diese eingefahren werden.

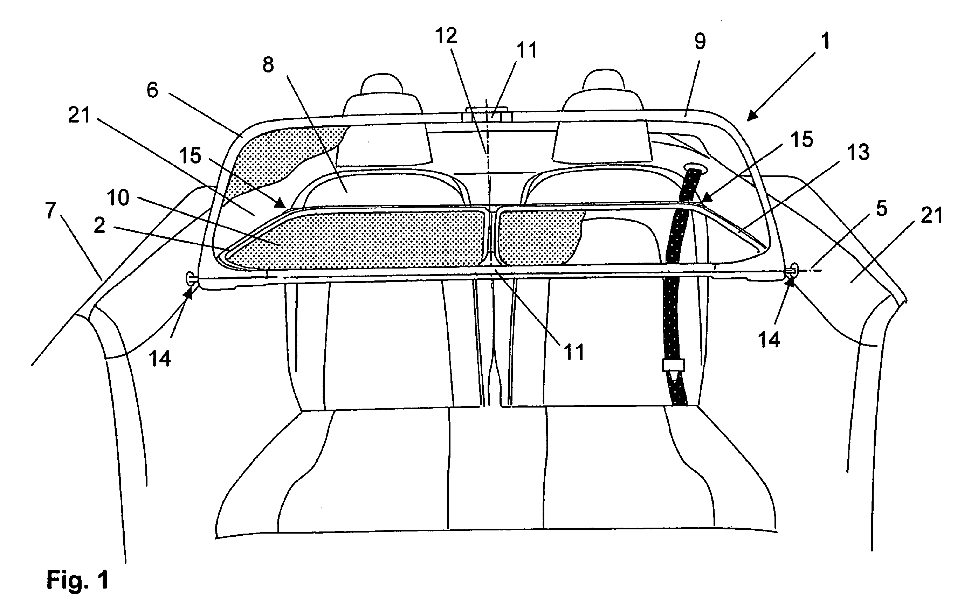

Eine Windschotteinrichtung, die gemäß den Figuren 9 und 9a montiert wird, kann ein einfaches Gelenk zum Klappen des Windschotts 6 gegenüber der Abdeckung 2 als auch eine Windschotteinrichtung 1 mit einem Doppelgelenk (s. Figur 1) aufweisen.

Eine weitere Variante der Erfindung sieht eine Montage einer Windschotteinrichtung 1 in Fahrzeugquerrichtung vor. Hierzu umfassen auch die vorderen Fixiereinrichtungen 14 je zwei, einander gegenüberliegend angeordnete starre Halteelemente 16. Die vorderen Haltelemente sind zweckmäßigerweise an den in aller Regel weniger gebogenen Verlauf der Fahrzeugseitenwände angepasst; insbesondere kann es vorteilhaft sein, die schräge Fläche 25 weniger bis gar nicht auszuprägen. Entsprechend den vier Fixiereinrichtungen 14, 15, sind in dem Fahrzeug vier Aufnahmen 17 paarweise an gegenüberliegeriden Seitenwänden angeordnet, wie in Figur 10 dargestellt. Diese Montagevariante ist nur mit Windschotteinrichtungen 1 möglich, welche über ein Doppelgelenk in Fahrzeugquerrichtung zusammenklappbar sind (s. Figur 1). Zur Montage muss die Windschotteinrichtung 1 in leicht geklappter Stellung (s. Ansicht in x-Richtung gemäß der Figur 11) zunächst auf einer Seite des Fahrzeugs mit ihren Halteelementen 16 in die Aufnahmen 17 eingesetzt werden, s. Pfeile f2 in der Ansicht in y-Richtung. Das Halten dieser Stellung kann durch Federelemente in den Gelenken 11 bzw. Scharnieren der Abdeckung 2 erleichtert werden, um eine Zwischenrastung zu erhalten. Unter Aufklappen der Windschotteinrichtung 1 (s. Pfeil f3 in Figur 11) können anschließend auf der gegenüberliegenden Seite die Halteelemente 16 in die Aufnahmen 17 schräg von oben eingesetzt werden. Die Aufnahmen 17 sind für diese Montagevariante mit einer schrägen oberen Abstützfläche 20" versehen. Sobald die Windschotteinrichtung 1 vollständig aufgeklappt ist, ist es durch die Abstützflächen 20 der Aufnahmen 17 in dem Fahrzeug fixiert. Um ein Aufklappen der Windschotteinrichtung 1 zu verhindern, können die Gelenke 11 beispielsweise durch einen Sicherungsbolzen, eine über die Gelenke schiebbare Verriegelungshülse o.ä. fixiert werden. Dieser ist vorzugsweise so ausgeführt, dass er bei Montage automatisch verrastet und bei Demontage von Hand betätigbar ist.

Bei Montage der Windschotteinrichtung 1 in Fahrzeugquerrichtung kann ein umständliches Hantieren mit querbeweglichen Stiften, welches nur vom Fahrzeuginnenraum aus möglich war, vollständig entfallen. Die Montage kann bedienerfreundlich von außen erfolgen. Hierbei kann der Bediener besonders bevorzugt seitlich neben dem Fahrzeug mit Blick auf die Hintersitze stehen oder die Windschotteinrichtung aus schräger Position einbauen (z.B. neben der Vordertür oder dem Kofferraum des PKW stehend). Aber auch ein Einbau der Windschotteinrichtung von den Vordersitzen aus ist selbstverständlich immer noch möglich.

Um die Windschotteinrichtung 1 insbesondere in Fahrzeugquerrichtung in dem Fahrzeug zu zentrieren und Fertigungstoleranzen auszugleichen, können verschiedene elastische und dämpfende Elemente an den Aufnahmen 17 oder den Halteeinrichtungen 16 angeordnet sein. Nach Figur 6 können hierzu die Halteelemente 16 umfangseitig mit einem Gummiring 28 versehen sein. Dieser kann in einer Nut, welche indem Halteelement 16 angeordnet ist, gesichert sein. Der Gummiring kann hierbei auch derart an dem Halteelement 16 angeordnet sein, dass er eine Zentrierung der Windschotteinrichtung in Fahrzeugquerrichtung bewirkt.

Ebenso kann jedoch das Halteelement 16 in seinem äußeren Bereich auch vollständig mit einer Gummierung versehen sein und hierdurch einen Ausgleich in allen Richtungen bewirken.

Nach Figur 8 ist an dem Halteelement 16 ein elastischer Vorsprung 29 angeordnet, welcher mit einer Ausnehmung 30 in der Aufnahme 17 zusammenwirkt, um die Halteelemente 16 in den Aufnahmen 17 zu fixieren und hierdurch unangenehmen Klappergeräuschen vorzubeugen. Die Anordnung von Vorsprung 29 und Ausnehmung 30 kann selbstverständlich auch umgekehrt werden, so dass die Ausnehmung 30 an dem Halteelement 16 und der Vorsprung 29 an der Aufnahme 17 liegt.

Anstelle eines einfachen elastischen Vorsprunges 30 kann auch eine federbelastete Kugel oder eine Druckfeder o.ä. an dem Halteelement 16 oder der Aufnahme 17 angeordnet werden, welche mit einer entsprechenden Ausnehmung 30 zusammenwirkt. Eine derartige federbelastete Kugel bzw. Druckfeder kann auch mit einem weiteren elastisch federnden Element kombiniert werden, welches beispielsweise in x-Richtung (Fahrzeuglängsrichtung) oder in z-Richtung (Fahrzeughochrichtung) wirkt.

Figur 7 zeigt schließlich eine Aufnahme 17, welche in Ruhestellung mit einem federbelasteten Deckel 3 verschlossen ist. Beim Einschieben oder Einsetzen der Halteelemente 16 wird der Deckel 3 entgegen der Federkraft an die Gleitfläche (Fig. 3) der Aufnahme 17 gedrückt. In Funktionsstellung, d. h. bei montierter Windschotteinrichtung 1, sorgt der federbelastete Deckel 3 dann für die Zentrierung der Windschotteinrichtung 1 in Fahrzeugquerrichtung und einen Klapperschutz. Zugleich können übermäßige Staubabsetzungen an den Abstützflächen 20 verhindert werden.

Durch die erfindungsgemäße Windschotteinrichtung mit seitlich überstehenden Halteelementen und die Aufnahmen des erfindungsgemäßen Personenkraftfahrzeugs kann ein besonders einfaches Einsetzen und Befestigen der Windschotteinrichtung 1 in dem Personenkraftfahrzeug erreicht werden. Die erfindungsgemäße Windschotteinrichtung 1 weist hierdurch einen besonders hohen Bedienkomfort auf. Ebenso können im Vergleich zum Stand der Technik die Kosten der Windschotteinrichtung 1 reduziert werden, da die Halteelemente 16 aus einfachen Elementen ohne aufwändige Betätigungseinrichtungen bestehen.

Die Erfindung ist nicht auf die dargestellten Ausführungsbeispiele beschränkt. Weitere Abwandlungen im Rahmen der Patentansprüche fallen ebenfalls unter die Erfindung. So ist es beispielsweise möglich, auf jeder Seite der Abdeckung nur ein längliches starres Halteelement (im Wesentlichen in x-Richtung verlaufend) vorzusehen, das in eine entsprechende Langnut in der jeweiligen Seitenwand des Fahrzeugs einführbar ist. Diese Variante ist insbesondere beim Einbau der Windschotteinrichtung in Fahrzeugquerrichtung (y-Richtung) als Alternative zu der in den Figuren 10 und 11 gezeigten Ausführungsform interessant.

## Patentansprüche

1. Windschotteinrichtung (1) für ein Personenkraftfahrzeug, umfassend ein Windschott (6) und eine schwenkbar mit dem Windschott (6) verbundene Abdeckung (2) für einen Teilbereich einer Fahrgastraumöffnung des Personenkraftfahrzeuges, mittels welcher das Windschott (6) in dem Personenkraftfahrzeug befestigbar ist, sowie Fixiereinrichtungen (14, 15) zur Befestigung der Abdeckung (2) in dem Fahrzeug, wobei zumindest zwei der Fixiereinrichtungen (15) starr angeordnete Halteelemente (16; 116) umfassen, **dadurch gekennzeichnet, dass** die montierten Halteelemente (16; 116) sich in Fahrzeugquerrichtung (y-Richtung) lokal über einen Rahmen (13) der Abdeckung (2) hinaus erstrecken sowie die seitlichen Fahrzeugverkleidungen (21) in Aufsicht gesehen schneiden und zum formschlüssigen Zusammenwirken mit an dem Personenkraftfahrzeug angeordneten Aufnahmen (17; 117) ausgebildet sind.

2. Windschotteinrichtung nach Anspruch 1, **dadurch gekennzeichnet, dass** die Fixiereinrichtungen (14, 15) seitlich jeweils mindestens ein an der Abdeckung (2) starr angeordnetes Halteelement (16; 116) umfassen, wobei die Windschotteinrichtung (1) zur Montage in Fahrzeugquerrichtung (y-Richtung) klappbar ausgeführt ist.

3. Windschotteinrichtung nach einem der vorhergehenden Ansprüche, **dadurch gekennzeichnet, dass** das Windschott (6) aus zwei Teilen besteht, welche durch ein Doppelgelenk (11) miteinander verbunden sind.

4. Windschotteinrichtung nach einem der vorhergehenden Ansprüche, **dadurch gekennzeichnet, dass** an jeder den seitlichen Fahrzeugverkleidungen (21) zugewandten Seiten eine vordere und eine hintere Fixiereinrichtung (14, 15) vorgesehen ist.

5. Windschotteinrichtung nach einem der vorhergehenden Ansprüche, **dadurch gekennzeichnet, dass** die starren Halteelemente (16; 116) zumindest im Bereich der hinteren Enden der Abdeckung (2) vorgesehen sind.

6. Windschotteinrichtung nach einem der vorhergehenden Ansprüche, **dadurch gekennzeichnet, dass** an jeder den seitlichen Fahrzeugverkleidungen (21) zugewandten Seiten der Abdeckung (2) jeweils eine oder zwei Fixiereinrichtungen (15) mit starrem Halteelement (16, 116) vorgesehen sind.

7. Windschotteinrichtung nach einem der vorhergehenden Ansprüche, **dadurch gekennzeichnet, dass** vordere Fixiereinrichtungen (14) in Fahrzeugquerrichtung (y-Richtung) bewegliche Stifte umfassen.

8. Windschotteinrichtung nach Anspruch 7, **dadurch gekennzeichnet, dass** die beweglichen Stifte für eine in Fahrzeuglängsrichtung (x-Richtung) erfolgende Montage der Windschotteinrichtung (1) einfahrbar und nach Montage zur Fixierung der Windschotteinrichtung (1) in dem Fahrzeug ausfahrbar sind.

9. Windschotteinrichtung nach einem der vorhergehenden Ansprüche, **dadurch gekennzeichnet, dass** die Halteelemente (16; 116) als Nasen ausgebildet sind.

10. Windschotteinrichtung nach einem der vorhergehenden Ansprüche, **dadurch gekennzeichnet, dass** die Halteelemente (116) jeweils eine endseitige Verbreiterung (116') in Fahrzeughochrichtung (z-Richtung) aufweisen, welche das Halteelement (116) in der Aufnahme (117) in y-Richtung fixieren.

11. Windschotteinrichtung nach einem der vorhergehenden Ansprüche, **dadurch gekennzeichnet, dass** die Halteelemente (16; 116) bezogen auf den seitlichen Rahmen der Abdeckung (2) eine schräge Seitenfläche (25) aufweisen.

12. Windschotteinrichtung nach einem der vorhergehenden Ansprüche, **dadurch gekennzeichnet, dass** die Halteelemente (16; 116) als separate Bauteile ausgebildet sind, welche durch wenigstens ein Befestigungsmittel mit dem Rahmen (13) der Abdeckung (2) verbunden sind.

13. Windschotteinrichtung nach einem der vorhergehenden Ansprüche, **dadurch gekennzeichnet, dass** die Halteelemente (16; 116) einteilig mit dem Rahmen (13) der Abdeckung (2) ausgeführt sind.

14. Windschotteinrichtung nach einem der vorhergehenden Ansprüche, **dadurch gekennzeichnet, dass** der Rahmen (13) als einteiliges, gebogenes Profil, insbesondere als Aluminiumprofil, ausgebildet ist.

15. Windschotteinrichtung nach einem der vorhergehenden Ansprüche, **dadurch gekennzeichnet, dass** der Rahmen (13) mehrteilig aus Profilen ausgeführt ist, welche durch Verbindungsstücke (24) miteinander verbunden sind.

16. Windschotteinrichtung nach Anspruch 15, **dadurch gekennzeichnet, dass** die Verbindungsstücke (24) aus Kunststoff gefertigt sind, wobei die Halteelemente (16; 116) der Fixiereinrichtungen (15) einteilig an ein Verbindungsstück (24) angeformt sind.

17. Windschotteinrichtung nach einem der vorhergehenden Ansprüche, **dadurch gekennzeichnet, dass** an den Halteelementen (16) elastische und/oder dämpfende Elemente (29) zum Ausgleich von Toleranzen in Fahrzeugquerrichtung (y-Richtung) und/oder zur Entklapperung vorgesehen sind.

18. Windschotteinrichtung nach einem der vorhergehenden Ansprüche, **dadurch gekennzeichnet, dass** die Halteelemente (16) mit einem Gummiring (28) und/oder zumindest in einem Teilbereich mit einer Gummierung versehen sind.

19. Windschotteinrichtung nach einem der vorhergehenden Ansprüche, **dadurch gekennzeichnet, dass** an den Halteelementen (16) in Fahrzeugquerrichtung (y-Richtung) ein federbelastetes Element, insbesondere eine Kugel, angeordnet ist, welches mit einer entsprechenden Ausnehmung (30) der Aufnahme zusammenwirkt.

20. Personenkraftfahrzeug mit einer Windschotteinrichtung (1), welche ein Windschott (6) und eine schwenkbar mit dem Windschott (6) verbundene Abdeckung (2), mittels welcher das Windschott (6) in dem Personenkraftfahrzeug befestigbar ist, sowie Fixiereinrichtungen (14, 15) zur Befestigung der Abdeckung (2) in dem Fahrzeug umfasst, wobei zumindest zwei der Fixiereinrichtungen (15) starr angeordnete Halteelemente (16; 116) umfassen, **dadurch gekennzeichnet, dass** an dem Personenkraftfahrzeug wenigstens zwei Aufnahmen (17; 117) jeweils im Bereich einander gegenüberliegender Seitenwände angeordnet sind, welche zum formschlüssigen Zusammenwirken mit den Halteelementen (16; 116) der Fixiereinrichtungen (15) ausgebildet sind, wobei die Halteelemente (16; 116) sich in Fahrzeugquerrichtung (y-Richtung) lokal über einen Rahmen der Abdeckung (2) hinaus erstrecken.

21. Personenkraftfahrzeug nach Anspruch 20, **dadurch gekennzeichnet, dass** die Aufnahmen (17; 117) zumindest zwei einander gegenüberliegende Abstützflächen (20; 120) zur Abstützung der Halteelemente (16; 116) in Fahrzeughochrichtung (z-Richtung) aufweisen.

22. Personenkraftfahrzeug nach Anspruch 20 oder 21, **dadurch gekennzeichnet, dass** die Aufnahmen (17; 117) an Seitenverkleidungen (21) des Personenkraftfahrzeugs angeordnet sind.

23. Personenkraftfahrzeug nach einem der Ansprüche 20 bis 22, **dadurch gekennzeichnet, dass** die Aufnahmen (17; 117) einteilig mit den Seitenverkleidungen (21) des Personenkraftfahrzeugs ausgebildet sind.

24. Personenkraftfahrzeug nach einem der Ansprüche 20 bis 23, **dadurch gekennzeichnet, dass** die Aufnahmen (17; 117) zur Versteifung mit der Karosserie des Personenkraftfahrzeuges verbunden sind.

25. Personenkraftfahrzeug nach einem der Ansprüche 20 bis 24, **dadurch gekennzeichnet, dass** die Aufnahmen (17; 117) zum Einschieben der Halteelemente (16; 116) von vorn nach hinten bezogen auf die Fahrtrichtung (x-Richtung) ausgebildet sind.

26. Personenkraftfahrzeug nach einem der Ansprüche 20 bis 25, **dadurch gekennzeichnet, dass** an dem Personenkraftfahrzeug jeweils mindestens eine Aufnahme (17) im Bereich einander gegenüberliegender Seitenwände des Fahrzeugs angeordnet ist, welche zum formschlüssigen Zusammenwirken mit Halteelementen (16) der Fixiereinrichtungen (14, 15) ausgebildet sind, wobei die Aufnahmen (17) zum Einschieben der Halteelemente (16) in Fahrzeugquerrichtung (y-Richtung) ausgebildet sind.

27. Personenkraftfahrzeug nach Anspruch 26, **dadurch gekennzeichnet, dass** jeweils zwei Aufnahmen (17) paarweise im Bereich einander gegenüberliegender Seitenwände angeordnet sind.

28. Personenkraftfahrzeug nach Anspruch 26, **dadurch gekennzeichnet, dass** an jeder Seitenwand des Fahrzeugs jeweils nur eine einzige, länglich ausgebildete Aufnahme vorgesehen ist.

## Claims

1. A wind blocking device (1) for a passenger car, comprising a windblocker (6) and a cover (2) pivotally connected to the windblocker (6) for a partial area of a passenger compartment opening of the passenger car, by means of which the windblocker (6) can be attached in the passenger car, and attaching devices (14, 15) for attaching the cover (2) in the vehicle, at least two of the attaching devices (15) comprising rigidly disposed mounting elements (16; 116) **characterized in that** the mounted mounting elements (16; 116) extend locally in the transverse vehicle direction (Y direction) beyond a frame (13) of the cover (2), and intersect the side vehicle trim (21) in the top view, and are implemented for positively interlocking with receptacles (17; 117) disposed on the passenger car.

2. The wind blocking device according to Claim 1, **characterized in that** the attaching devices (14, 15) comprise on the side thereof at least one mounting element (16; 116) rigidly disposed on the cover (2), wherein the wind blocking device (1) is implemented so as to be foldable for installation in the transverse vehicle direction (Y direction).

3. The wind blocking device according to one of the preceding claims, **characterized in that** the windblocker (6) is made of two parts connected to each other by a double joint (11).

4. The wind blocking device according to one of the preceding claims, **characterized in that** a front and a rear attaching device (14, 15) is provided on each of the sides facing the side vehicle trim (21).

5. The wind blocking device according to one of the preceding claims, **characterized in that** the rigid mounting elements (16; 116) are provided at least in the area of the back ends of the cover (2).

6. The wind blocking device according to one of the preceding claims, **characterized in that** one or two attaching devices (15) having a rigid mounting element (16; 116) are provided at each of the sides of the cover (2) facing the side vehicle trim (21).

7. The wind blocking device according to one of the preceding claims, **characterized in that** front attaching devices (14) comprise pins displaceable in the transverse vehicle direction (Y direction).

8. The wind blocking device according to claim 7, **characterized in that** the displaceable pins can be retracted in order to install the wind blocking device (1) in the longitudinal direction (X direction) of the vehicle, and can be extended after installation in order to secure the wind blocking device (1) in the vehicle.

9. The wind blocking device according to one of the preceding claims, **characterized in that** the mounting elements (16; 116) are implemented as protrusions.

10. The wind blocking device according to one of the preceding claims, **characterized in that** the mounting elements (116) each comprise an end side widened part (116') in the vertical vehicle direction (Z direction), fixing the mounting element (116) in the receptacle (117) in the y direction.

11. The wind blocking device according to one of the preceding claims, **characterized in that** the mounting elements (16; 116) comprise a beveled side surface (25) with respect to the side frame of the cover (2).

12. The wind blocking device according to one of the preceding claims, **characterized in that** the mounting elements (16; 116) are implemented as separate components connected to the frame (13) of the cover (2) by at least one attaching means.

13. The wind blocking device according to one of the preceding claims, **characterized in that** the mounting elements (16; 116) are implemented as a single piece with the frame (13) of the cover (2).

14. The wind blocking device according to one of the preceding claims, **characterized in that** the frame (13) is implemented as a single curved profile, particularly as an aluminum profile.

15. The wind blocking device according to one of the preceding claims, **characterized in that** the frame (13) is made of multiple profile parts connected to each other by connecting parts (24).

16. The wind blocking device according to claim 15, **characterized in that** the connecting parts (24) are made of plastic, wherein the mounting elements (16; 116) of the attaching devices (15) are formed integrally on a connecting part (24).

17. The wind blocking device according to one of the preceding claims, **characterized in that** elastic and/or damping elements (29) are provided on the mounting elements (16) for compensating tolerances in the transverse vehicle direction (Y direction) and/or for eliminating rattles.

18. The wind blocking device according to one of the preceding claims, **characterized in that** the mounting elements (16) have a rubber ring (28) and/or have a rubber coating at least in a partial area.

19. The wind blocking device according to one of the preceding claims, **characterized in that** a spring-loaded element, particularly a sphere, is disposed on the mounting elements (16) in the transverse vehicle direction (Y direction) and interacts with a corresponding recess (30) of the receptacle.

20. A passenger car having a wind blocking device (1) comprising a windblocker (6) and a cover (2) pivotally connected to the windblocker (6) by means of which the windblocker (6) can be attached in the passenger car, and attaching devices (14, 15) for attaching the cover (2) in the vehicle, at least two of the attaching devices (15) comprising rigidly disposed mounting elements (16; 116), **characterized in that** at least two receptacles (17; 117) are disposed on the passenger car, each in the area of opposite side walls, implemented for positively interlocking with the mounting elements (16; 116) of the attaching devices (15), wherein the mounting elements (16; 116) extend locally in the transverse vehicle direction (Y direction) beyond a frame of the cover (2).

21. The passenger car according to claim 20, **characterized in that** the receptacles (17; 117) comprise at least two support surfaces (20; 120) opposite each other for supporting the mounting elements (16; 116) in the vertical vehicle direction (Z direction).

22. The passenger car according to claim 20 or 21, **characterized in that** the receptacles (17; 117) are disposed on side trim components (21) of the passenger car.

23. The passenger car according to one of the claims 20 through 22, **characterized in that** the receptacles (17; 117) are implemented as a single part with the side trim components (21) of the passenger car.

24. The passenger car according to one of the claims 20 through 23, **characterized in that** the receptacles (17; 117) are connected to the body of the passenger car for reinforcement.

25. The passenger car according to one of the claims 20 through 24, **characterized in that** the receptacles (17; 117) are implemented for inserting the mounting elements (16; 116) from the front to the back, relative to the direction of travel (X direction).

26. The passenger car according to one of the claims 20 through 25, **characterized in that** at least one receptacle (17) is disposed on the passenger car in the area of opposite side walls of the vehicle, implemented for positively interlocking with mounting elements (16) of the attaching devices (14, 15), wherein the receptacles (17) are implemented for inserting the mounting elements (16) in the transverse vehicle direction (Y direction).

27. The passenger car according to claim 26, **characterized in that** two receptacles (17) each are disposed in pairs in the area of opposite side walls.

28. The passenger car according to claim 26, **characterized in that** only one elongated receptacle is provided on each side wall of the vehicle.

## Revendications

1. Dispositif coupe-vent (1) pour une voiture particulière, comprenant un coupe-vent (6) et un capotage (2) relié de manière pivotante avec le coupe-vent (6) pour une zone partielle d'une ouverture d'habitacle de la voiture particulière, au moyen duquel le coupe-vent (6) peut être fixé dans la voiture particulière, ainsi que des dispositifs de fixation (14, 15) pour la fixation du capotage (2) dans la voiture, sachant que deux au moins des dispositifs de fixation (15) comportent des éléments d'arrêt (16; 116) disposés de manière raide, **caractérisé en ce que** les éléments d'arrêt montés (16; 116) se prolongent localement dans le sens transversal de la voiture (sens y) au-delà d'un cadre (13) du capotage (2) ainsi et coupent les habillages latéraux (21) de la voiture en vue de dessus et se présentent sous une forme leur permettant de coopérer par complémentarité de forme avec des logements (17; 117) disposés à la voiture particulière.

2. Dispositif coupe-vent selon la revendication 1, **caractérisé en ce que** les dispositifs de fixation (14, 15) comportent respectivement sur le côté au moins un élément d'arrêt (16; 116) disposé de manière raide au capotage (2), sachant que le dispositif coupe-vent (1) se présente sous une forme repliable pour le montage dans le sens transversal de la voiture (sens y).

3. Dispositif coupe-vent selon l'une quelconque des revendications précédente, **caractérisé en ce que** le coupe-vent (6) se compose de deux pièces, qui sont reliées l'une à l'autre par une double articulation (11).

4. Dispositif coupe-vent selon l'une quelconque des revendications précédentes, **caractérisé en ce qu'**un dispositif de fixation (14, 15) avant et arrière est prévu sur chacun des côtés tourné vers les habillages latéraux (21) de la voiture.

5. Dispositif coupe-vent selon l'une quelconque des revendications précédentes, **caractérisé en ce que** les éléments d'arrêt raides (16; 116) sont prévus au moins en zone d'extrémité arrière du capotage (2).

6. Dispositif coupe-vent selon l'une quelconque des revendications précédentes, **caractérisé en ce qu'**un ou deux dispositif(s) de fixation (15) avec élément d'arrêt raide (16; 116) est/sont prévu(s) sur chacun des côtés du capotage (2) tourné vers les habillages latéraux (21) de la voiture.

7. Dispositif coupe-vent selon l'une quelconque des revendications précédentes, **caractérisé en ce que** des dispositifs de fixation avant (14) comportent des goupilles mobiles dans le sens transversal de la voiture (sens y).

8. Dispositif coupe-vent selon la revendication 7, **caractérisé en ce que** les goupilles mobiles peuvent être rentrées pour le montage du dispositif coupe-vent (1) s'effectuant dans le sens longitudinal (sens x) de la voiture et peuvent être débrochés après le montage pour la fixation du dispositif coupe-vent (1) dans la voiture.

9. Dispositif coupe-vent selon l'une quelconque des revendications précédentes, **caractérisé en ce que** les éléments d'arrêt (16; 116) se présentent sous la forme de tenons.

10. Dispositif coupe-vent selon l'une quelconque des revendications précédentes, **caractérisé en ce que** les éléments d'arrêt (116) présentent respectivement un élargissement (116') en zone d'extrémité, dans le sens de la hauteur de la voiture particulière (sens z), qui fixe l'élément d'arrêt (116) dans le logement (117) dans le sens y.

11. Dispositif coupe-vent selon l'une quelconque des revendications précédentes, **caractérisé en ce que** les éléments d'arrêt (16; 116) présentent une surface latérale (25) inclinée par rapport au cadre latérale du capotage (2).

12. Dispositif coupe-vent selon l'une quelconque des revendications précédentes, **caractérisé en ce que** les éléments d'arrêt (16; 116) se présentent sous la forme de composants séparés, qui sont reliés par au moins un moyen de fixation avec le cadre (13) du capotage (2).

13. Dispositif coupe-vent selon l'une quelconque des revendications précédentes, **caractérisé en ce que** les éléments d'arrêt (16; 116) se présentent sous forme en une pièce avec le cadre (13) du capotage (2).

14. Dispositif coupe-vent selon l'une quelconque des revendications précédentes, **caractérisé en ce que** le cadre (13) se présente sous la forme d'un profilé en une pièce, cintré, particulièrement d'un profilé en aluminium.

15. Dispositif coupe-vent selon l'une quelconque des revendications précédente, **caractérisé en ce que** le cadre (13) se présente sous une forme en plusieurs profilés, qui sont reliés les uns aux autres par des pièces de jonction (24).

16. Dispositif coupe-vent selon la revendication 15, **caractérisé en ce que** les pièces de jonction (24) sont réalisées en matière plastique, sachant que les éléments d'arrêt (16; 116) des dispositifs de fixation (15) sont formés en une pièce à une pièce de jonction (24).

17. Dispositif coupe-vent selon l'une quelconque des revendications précédentes, **caractérisé en ce que** des éléments élastiques et/ou amortisseurs (29) sont prévus aux éléments d'arrêts (16) pour la compensation des tolérances dans le sens transversal de la voiture particulière (sens y) et/ou l'isolation antivibratoire.

18. Dispositif coupe-vent selon l'une quelconque des revendications précédentes, **caractérisé en ce que** les éléments d'arrêt (16) sont dotés d'un anneau en caoutchouc (28) et/ou, au moins dans une zone partielle, d'un gommage.

19. Dispositif coupe-vent selon l'une quelconque des revendications précédentes, **caractérisé en ce qu'**un élément soumis à l'action d'un ressort, particulièrement une bille, est disposé aux éléments d'arrêt (16) dans le sens transversal de la voiture particulière (sens y), qui coopère avec un évidement (30) correspondant du logement.

20. Voiture particulière avec un dispositif coupe-vent (1), qui comporte un coupe-vent (6) et un capotage (2) relié de manière pivotante avec le coupe-vent (6), au moyen duquel le coupe-vent (6) peut être fixé dans la voiture particulière, ainsi que des dispositifs de fixation (14, 15) pour la fixation du capotage (2) dans la voiture, sachant que deux au moins des dispositifs de fixation (15) comportent des éléments d'arrêt (16; 116) disposés de manière raides, **caractérisée en ce que** deux logements (17; 117) au moins sont disposés respectivement à la voiture particulière, en zone de parois latérales opposées l'une à l'autres, qui se présentent sous une forme leur permettant de coopérer par complémentarité de forme avec les éléments d'arrêt (16; 116) des dispositifs de fixation (15), sachant que les éléments d'arrêt (16; 116) se prolongent localement dans le sens transversal de la voiture (sens y) au-delà d'un cadre du capotage (2).

21. Voiture particulière selon la revendication 20, **caractérisée en ce que** les logements (17; 117) présentent au moins deux surfaces d'appui (20; 120) opposées l'une à l'autre pour soutenir les éléments d'arrêt (16; 116) dans le sens de la hauteur de la voiture particulière (sens z).

22. Voiture particulière selon la revendication 20 ou 21, **caractérisée en ce que** les logements (17; 117) sont disposés à des habillages latéraux (21) de la voiture particulière.

23. Voiture particulière selon l'une quelconque des revendications 20 à 22, **caractérisée en ce que** les logements (17; 117) sont formés en une pièce avec les habillages latéraux (21) de la voiture particulière.

24. Voiture particulière selon l'une quelconque des revendications 20 à 23, **caractérisée en ce que** les logements (17; 117) sont reliés à la carrosserie de la voiture particulière pour le renforcement.

25. Voiture particulière selon l'une quelconque des revendications 20 à 24, **caractérisée en ce que** les logements (17; 117) se présentent sous une forme permettant d'introduire les éléments d'arrêt (16; 116) de l'avant vers l'arrière par rapport au sens de circulation (sens x).

26. Voiture particulière selon l'une quelconque des revendications 20 à 25, **caractérisée en ce qu'**un logement (17) au moins est disposé respectivement à la voiture particulière, dans la zone de parois latérales opposées de la voiture particulière, qui se présente sous forme lui permettant de coopérer par complémentarité de forme avec des éléments d'arrêt (16) des dispositifs de fixation (14, 15), sachant que les logements (17) se présentent sous une forme permettant d'introduire les éléments d'arrêt (16) dans le sens transversal (sens y) de la voiture particulière.

27. Voiture particulière selon la revendication 26, **caractérisée en ce que** deux logements (17) sont respectivement disposés en paire dans la zone de parois latérales opposées l'une à l'autre.

28. Voiture particulière selon la revendication 26, **caractérisée en ce qu'**un seul logement se présentant sous forme oblongue est respectivement prévu à chaque paroi latérale de la voiture particulière.
